Europäisches Patentamt

European Patent Office

Office européen des brevets

(19)

(11) Veröffentlichungsnummer : **0 074 457 B2**

(12) # NEUE EUROPÄISCHE PATENTSCHRIFT

(45) Veröffentlichungstag der neuen Patentschrift :
27.03.91 Patentblatt 91/13

(51) Int. Cl.$^5$ : **G01N 29/04**

(21) Anmeldenummer : 82101100.4

(22) Anmeldetag : 15.02.82

(54) **Messverfahren zur Fehlerbestimmung in Schweissnähten.**

(30) Priorität : 10.09.81 DE 8126298 U

(43) Veröffentlichungstag der Anmeldung :
23.03.83 Patentblatt 83/12

(45) Bekanntmachung des Hinweises auf die
Patenterteilung :
06.05.87 Patentblatt 87/19

(45) Bekanntmachung des Hinweises auf die
Entscheidung über den Einspruch :
27.03.91 Patentblatt 91/13

(84) Benannte Vertragsstaaten :
AT BE DE FR GB IT NL SE

(56) Entgegenhaltungen :
DE-A- 2 623 892
DE-A- 2 636 401
DE-A- 2 846 153

(56) Entgegenhaltungen :
US-A- 3 766 775
US-A- 4 170 143
US-A- 4 213 183
J.u.H. Krautkrämer - Werkstoffprüfung mit Ultraschall - Springer Verlag 1975
KTA Regel 3201.3
AD Merkblatt HP 5/3 09.1981
Stahl- Eisen- Lieferbedingungen 072 12.1977
Werkstoff-Handbuch Stahl und Eisen 4. Auflage, S. V 31-1 bis 3

(73) Patentinhaber : Hoesch Aktiengesellschaft
Eberhardstrasse 12
W-4600 Dortmund 1 (DE)

(72) Erfinder : Koch, Friedrich-Otto, Dipl.-Ing.
Auf der Bleiche 44
W-4750 Unna-Massen (DE)
Erfinder : Wahl, Hans-Jürgen, Dipl.-Phys.
Breul 16a
W-4400 Münster (DE)

EP 0 074 457 B2

**Beschreibung**

Die Erfindung betrifft ein Meßverfahren gemäß dem Oberbegriff des Anspruches 1.

Bekanntlich wird bei der Ultraschallprüfung (US-Prüfung) von Schweißnähten nach dem Impuls-Echo-Verfahren nur das maximale US-Fehlersignal zur Bewertung eines Fehlers herangezogen. Dies entspricht aber nicht der Schädlichkeit eines Fehlers für das Fertigprodukt, zumal infolge von Interferenzen der Zusammenhang zwischen US-Fehlersignal und Fehlertiefe nicht eindeutig ist und von daher die Bewertung eines einzelnen US-Fehlersignales fragwürdig ist. Aus diesem Grunde war bisher in der Regel eine manuelle US-Nachprüfung vermuteter Fehlstellen erforderlich ; ein in einem kontinuierlichen, weitgehend automatisierten Fertigungsprozeß äußerst störender Aufwand.

Bekannt ist andererseits eine Fehlergrößenbestimmung, insbesondere Fehlerflächenbewertung bei der US-Prüfung von Blechen (J. u. H. Krautkrämer, Werkstoffprüfung mit Ultraschall, Springer-Verlag 1975, S. 401-415), bei der aufgrund von Größe und Häufigkeit von Werkstoffungänzen eine dem Fertigprodukt angemessene Qualitatsentscheidung durch Klassenvergleich nach den «Stahl-Eisen-Lieferbedingungen 072» – getroffen wird. Die Registrierung der Fehler kann dabei durch Aufzeichnen und die Bewertung visuell oder durch Rechner erfolgen. Eine solche einfache Fehlerflächenbewertung ist bei Schweißnähten nicht möglich, da hier die Fehler überwiegend senkrecht zur Werkstückoberfläche ausgerichtet sind und daher das übliche US-Durchschallungsverfahren nicht einsetzbar ist.

Der Erfindung liegt die Aufgabe zugrunde, ein verbessertes Meßverfahren für die Fehlerprüfung von Schweißnähten nach dem Ultraschall-Impuls-Echo-Verfahren vorzuschlagen, bei dem insbesondere die Ausdehnung eines Fehlers erfaßt und eine an der Verwendung eines Werkstückes orientierte Klassifizierung von Schweißnahtfehlern ermöglicht wird bei Verwendung marktüblicher Prüfanlagen in automatischen Fertigungsprozessen. Diese Aufgabe wird erfindungsgemäß durch das im Anspruch 1 angegebene Meßverfahren gelöst. Vorteilhafte Weiterbildungen der Erfindung sind in den übrigen Ansprüchen erfaßt.

Bei diesen erfindungsgemäßen Meßverfahren wird die bislang praktizierte US-Prüfung von Schweißnähten dahingehend erweitert, daß anstelle eines einzelnen US-Fehlersignales eine Anzeigenfehlerfläche oder projektierte Fehlerfläche zur Bewertung herangezogen wird, die dadurch entsteht. daß die zu jedem Längenabschnitt der Schweißnaht – sie ist entsprechend der Längenmeßsignalfolge in Intervalle aufgeteilt – gehörende Maximalamplitude mit der Intervallbreite multipliziert wird und alle hintereinander folgenden so gewonnenen Flächenelemente aufaddiert werden. Die Anzeigenfehlerfläche kann dann nicht wie herkömmlich mit nur einem Sollwert, der Testfehlerschwelle, sondern mit einer nach Amplitudenhöhen gestaffelten Fehlerlängenklasse automatisch verglichen werden. Das Ergebnis läßt sich für Prüfberichte wie Abnahmezeugnisse usw. registrieren und natürlich wie üblich im Falle einer zu großen Ungänze auch auf dem Werkstück markieren, damit dieses aussortiert werden kann.

Mit der Erfindung können Schweißnahtfehler wesentlich differenzierter bewertet werden als bisher, weil nunmehr die Möglichkeit gegeben ist. Fehlerlängen bzw. Fehlerausdehnungen mit zu berücksichtigen, welche nach dem Stand der Technik für die Bruchmechanik entscheidende Bedeutung haben. Bei der Bewertung der Fehler nach ihrer Anzeigenfläche wird auch der eingangs beschriebene Nachteil der Bewertung einzelner US-Fehlersignale weitestgehend ausgemittelt, weil natürliche Fehler in der Regel in ihrem Verlauf kleine Winkeländerungen aufweisen, wodurch die Interferenzlöcher und -spitzen wesentlich abgeschwächt werden. Eine spezielle Bewertung der Lücken zwischen zwei Anzeigefehlerflächen hilft die Bedeutung von kumulierten kleineren Fehlern entsprechend zu wichten bzw. die genannten Interferenzlöcher von der Bewertung auszuschalten.

Die vorhergehend beschriebene Klassifizierung der Fehler während der üblichen Prüfgeschwindigkeiten um 60 m/min bei zu erwartenden Fehlerlängen von etwa 0,5 mm bis in den dm-Bereich läßt sich besonders einfach durchführen, wenn man die zunächst digitalisierten US-Fehlersignale in einem handelsüblichen Kleinrechnersystem mit integriertem Komparator verarbeitet. Damit ist es auch möglich, periodisch auftretende Fehler, wie z.B. von oberflächenbeschädigten Rollen in Walzanlagen erzeugt, zu verfolgen und mit einem digital abgespeicherten Katalog möglicher Fehlerperioden zu vergleichen, um eine Fehlerunterscheidung zu ermöglichen.

Manche Fehlertypen und insbesondere deren Fehlertiefen lassen sich bekanntlich besser mit der magnetischen Streuflußprüfung ermitteln. Von dieser Erkenntnis macht eine erfindungsgemäße Weiterbildung des Meßverfahrens Gebrauch, indem die US-Prüfung kombiniert wird mit der magnetischen Streuflußprüfung, insbesondere auch zur Bestimmung der Amplitudenhöhe der Anzeigenfehlerfläche. Das erfindungsgemäße Meßverfahren läßt eine so weitgehende Verbesserung der Fehlerbewertung zu, daß eine manuelle Nachprüfung in Zukunft überflüssig sein wird. Die Erfindung ist nicht auf die Schweißnahtprüfung begrenzt. es ist eine Ausweitung der Anwendung z.B. für die Rißprüfung in Werkstücken möglich.

Anhand schematischer Zeichnungen soll ein Ausführungsbeispiel der Erfindung näher erlautert werden. Es zeigen

Figur 1 Blockschaltbild des Verfahrensablaufes und

Figur 2 eine Darstellung von Anzeigefehlerflächen.

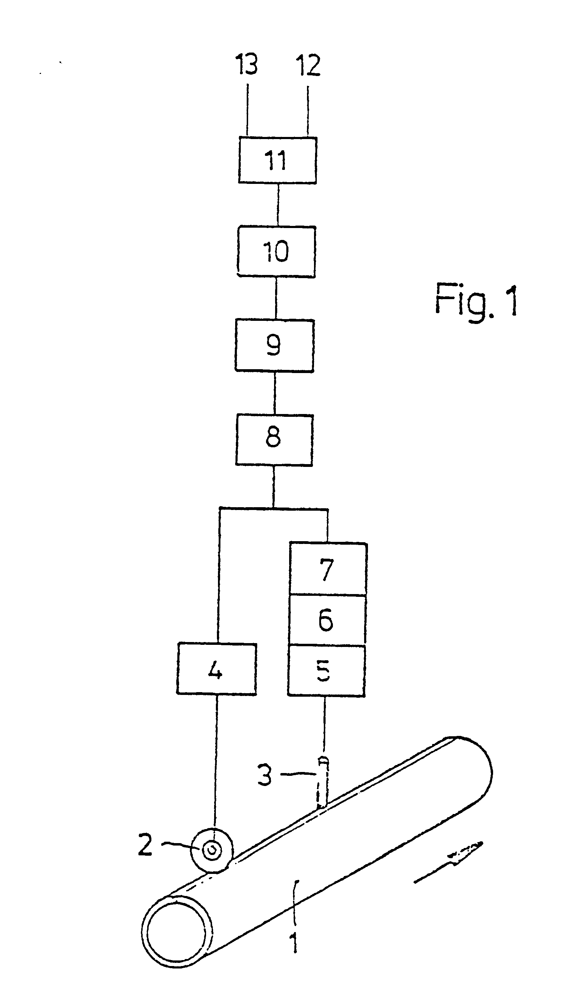

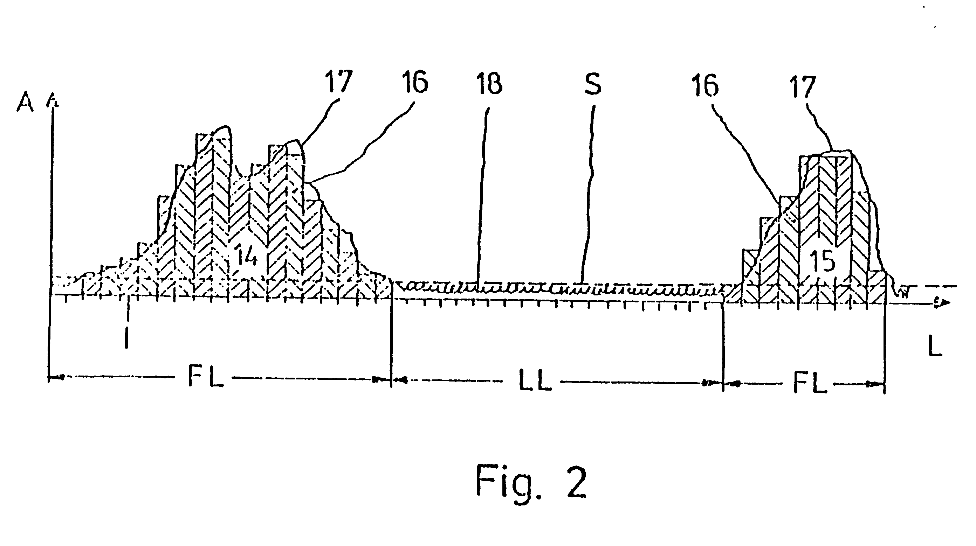

Die Prüfung einer Schweißnaht an einem längsnahtgeschweißten Stahlrohr 1 erfolgt mit einer Ultraschallsonde 3 (Fig. 1). Das Strahlrohr 1 wird dabei axial mit einer Geschwindigkeit von 54 m/min unter der Ultraschallsonde 3 herbewegt. Das Tastrad 2 mit Impulsgeber für Intervalle von 0,3 mm mißt die durchlaufende Rohrlänge. Ein Schieberegister 4 sorgt für die Längenrichtige Verknüpfung von längenmeßimpulsen zu den US-Fehlersignalen, die von einer Sende-Empfangs-Elektronik 5 über einen Analog-Digital-Wandler 6 in einen Spitzenwertspeicher 7 gelangen, der nur das maximale digitalisierte US-Fehlersignal pro-Längenintervall in den Rechner 8 übergibt zur Multiplikation der Längenintervalle mit der Signalamplitude und dann das Produkt – ein Fehlerflächenelement 16 – zu den gegebenenfalls ermittelten vorherigen Fehlerflächenelementen zu einer Anzeigenfehlerfläche 14 addiert (Fig. 2). Da die Länge Lücke LL auf Störschwellenniveau größer ist als die Fehlerlänge FL, wird die ermittelte Anzeigenfehlerfläche 14 im Komparator 9 mit vorgegebenen Sollwerten aus amplitudenabhängigen, gestaffelten Fehlerflächen verglichen. Das resultierende Klassifizierungsergebnis wird in einen weiteren Speicher 10 gegeben. Nachdem die Klassifizierungsergebnisse eines Stahlrohres 1 im Speicher 6 vorliegen, d.h. nach einem Signal von einem nicht dargestellten Näherungsinitiator über das Ende des Stahlrohres 1 an die Recheneinrichtung 11, werden von dieser die Klassifizierungsergebnisse aus Speicher 10 zu einem «Gesamtfehler» errechnet, mit einem Katalog vorgegebener Gesamtfehlergrößen sowie einem Katalog periodischer Fehler verglichen und zu einem Prüfergebnis : «gut» oder «schlecht» zusammengefaßt, so daß entsprechende Sortiersignale 12, 13 ein Aussondern fehlerhafter Stahlrohre möglich ist.

Fig. 2 zeigt Anzeigenfehlerflächen 14, 15 aufgetragen in einem Diagramm, mit den Amplitudenhöhen A der US-Fehlersignale über in Intervalle I aufgeteilten Länge L des Stahlrohres 1. Oberhalb einer «reitenden» Störschwelle s für die Störsignale 18 werden die max. Amplituden – hier dargestellt durch die Hüllkurve 17 – der US-Fehlersignale wie beschrieben mit den Längenintervallen I zu Anzeigenfehlerflächen verknüpft.

## Ansprüche

1. Meßverfahren für die zerstörungsfreie Prüfung von Schweißnähten an metallischen Werkstücken, bei dem der gemessene Längenabschnitt des Werkstückes mit einem erzielten Ultraschallprüfergebnis zur Fehlerflächenbestimmung längenrichtig verknüpft, das ermittelte Ergebnis klassifiziert und mit einem Klassenkatalog verglichen wird, dadurch gekennzeichnet, daß die bei Prüfung der Schweißnaht anfallenden nach dem Impuls-Echo-Verfahren ermittelten Maximalamplituden der Ultraschall-Fehlersignale digitalisiert und mit Längenmeßsignalen des zugeordneten Werkstückabschnittes rechnerisch zu einer rasterartigen Anzeigenfehlerfläche verknüpft werden, wobei die Länge einer Anzeigenfehlerfläche mit der Länge der Lücke zu der folgenden Anzeigenfehlerfläche verglichen wird und wobei bei einem Ergebnis Länge Anzeigenfehlerfläche > n-mal Länge der Lücke die Anzeigenfehlerfläche hinter der Lücke zu der vorhergehenden addiert und dieses Verfahren mit der entstandenen Gesamt-Anzeigenfehlerfläche solange wiederholt wird, bis eine größere Lücke auftritt, wobei n die Werte 0,5 ; 1 ; 2 ; 3 ; 4 ; x annehmen kann.

2. Meßverfahren nach Anspruch 1, dadurch gekennzeichnet, daß die Anzeigenfehlerflächen oberhalb eines vorgegebenen Schwellwertes in einem Komparator automatisch mit dem Klassenkatalog verglichen und ein Überschreiten zulässiger Anzeigenfehlerflächen ortsgetreu auf dem Werkstück markiert wird und/oder zusätzlich registriert wird.

3. Meßverfahren nach Anspruch 1 oder 2, dadurch gekennzeichnet, daß zusätzlich eine magnetische Streuflußprüfung vorgenommen wird.

4. Meßverfahren nach Anspruch 3. dadurch gekennzeichnet, daß zusätzlich zu den digitalisierten Ultraschallfehlersignalen die digitalisierten Fehlersignale von der magnetischen Streuflußprüfung zur rechnerischen Verknüpfung für die Ermittlung der Anzeigenfehlerflächen benutzt werden.

5. Meßverfahren nach einem der vorhergehenden Ansprüche, dadurch gekennzeichnet, daß die Anzeigenfehlerflächen auf periodisches Auftreten längs der Schweißnaht untersucht und mit einem vorgegebenen abgespeicherten Periodenkatalog verglichen werden.

## Claims

1. Measuring process for the non-destructive testing of welded seams on metallic workpieces, in which the measured length section of the workpiece is combined in a manner corrected for length with an obtained ultrasonic test result for determination of the flaw area, the determined result is classified and is compared with a classification catalogue, characterised in that the maximum amplitudes of the ultrasonic flaw signals produced from the examination of the welded seam according to the pulse-echo method are digitalised and are combined with length measurement signals of the associated workpiece section by computation to produce a raster-type flaw area indication, wherein the length of an indicated flaw area is compared with the length of the gap to the following indicated flaw area, and wherein in the case of a result where the length of the indicated flaw area is greater than n times the length of the gap, the indicated flaw area following the gap is added to the preceding flaw area and this process is repeated to give a total indication of flaw area until a greater gap occurs, wherein n can take the values of 0.5 ; 1 ; 2 ; 3 ; 4 ; x.

2. Measuring process according to claim 1, characterised in that the indicated flaw area above a predetermined threshold value is compared automatically in a comparator with the classification catalogue, and any exceeding of permissible indicated flaw areas causes a marking to be made locally on the workpiece and/or for this fact to be recorded.

3. Measuring process according to claim 1 or 2, characterised in that a magnetic stray flux testing is additionally carried out.

4. Measuring process according to claim 3, characterised in that, in addition to the digitalised ultrasonic flaw signals, the digitalised flaw signals from the magnetic stray flux testing are used in the computational combination for the determination of the indicated flaw area.

5. Measuring process according to one of the preceding claims, characterised in that the indicated flaw areas occurring at periodic intervals along the length of the welded seam are searched for and are compared with a periodic catalogue in which information is already stored.

## Revendications

1. Procédé de mesure pour le contrôle non destructif de cordons de soudure de pièces de travail métalliques, dans lequel la longueur mesurée de la pièce de travail est associée en longueur à un résultat de contrôle aux ultrasons pour la détermination de surfaces défectueuses, tandis que le résultat déterminé est classifié et comparé à un catalogue de classes, caractérisé en ce que les amplitudes maximales des signaux de défauts aux ultrasons obtenus lors d'un contrôle d'un cordon de soudure et déterminés selon le procédé par écho d'impulsion, sont numérisées et associées numériquement à des signaux de mesure de longueur de la zone correspondante de la pièce de travail pour fournir, sous forme d'une trame, une indication de la surface défectueuse, tandis que l'on compare la longueur d'une indication de surface défectueuse à la longueur de l'intervalle jusqu'à l'indication suivante de surface défectueuse et, en présence d'un résultat : longueur de l'indication de surface défectueuse > n-fois longueur de l'intervalle, l'indication de surface défectueuse suivant l'intervalle est ajoutée à la précédente, et l'on répète ce procédé avec la surface défectueuse indiquée totale obtenue jusqu'à ce que l'on ait un plus grand intervalle, n pouvant avoir les valeurs de 0,5 ; 1 ; 2 ; 3 ; 4 ; x.

2. Procédé de mesure suivant la revendication 1, caractérisé en ce que les indications de surfaces défectueuses au-delà d'une valeur seuil prédéterminée sont comparées automatiquement, dans un comparateur, au catalogue de classes, tandis qu'un dépassement des indications de surfaces défectueuses tolérées est marqué correctement en place sur la pièce de travail et/ou est, en outre, enregistré.

3. Procédé de mesure suivant la revendication 1 ou 2, caractérisé en ce que l'on effectue, en outre, un contrôle de flux de dispersion magnétique.

4. Procédé de mesure suivant la revendication 3, caractérisé en ce que, en plus des signaux numérisés de défauts aux ultrasons, on utilise les signaux de défauts numérisés du contrôle de flux de dispersion magnétique pour l'association par calcul en vue de déterminer les indications de surfaces défectueuses.

5. Procédé de mesure suivant l'une des revendications précédentes, caractérisé en ce qu'on examine les indications de surfaces défectueuses apparaissant périodiquement le long de la pièce de travail, et on les compare à un catalogue de périodes prédéterminé et mémorisé.

Fig. 1

Fig. 2

EP 0 074 457 B2